# EUROPEAN PATENT SPECIFICATION

(11) **EP 1 452 949 B1**
(45) Date of publication and mention of the grant of the patent: **15.04.2009**
(21) Application number: 03004498.6
(22) Date of filing: 28.02.2003
(51) Int. Cl.: G06F 3/01

(54) **Haptic interface device**
Haptische Schnittstellenvorrichtung
Dispositif d'interface haptique

(43) Date of publication of application: 01.09.2004
(73) Proprietor: Bergamasco, Massimo, Pisa (IT); Salsedo, Fabio, 04100 Latina LT (IT); Avizzano, Carlo Alberto, 50101 Arena Metato, San Giuliano Terme PI (IT); Marcheschi, Simone, 55062 Colle di Compito, Capannori LU (IT); Angerilli, Michael, 55029 Ponte a Moriano LU (IT)
(72) Inventor: Bergamasco, Massimo, Pisa (IT); Salsedo, Fabio, 04100 Latina LT (IT); Avizzano, Carlo Alberto, 50101 Arena Metato, San Giuliano Terme PI (IT); Marcheschi, Simone, 55062 Colle di Compito, Capannori LU (IT); Angerilli, Michael, 55029 Ponte a Moriano LU (IT)
(74) Representative: Celestino, Marco

(56) References cited:
- WO-A-95/10080

## Description

### Field of the invention

The present invention relates to an human-computer interface device.

In particular, the invention relates to a human-computer interface device of haptic type, i.e. capable of engaging with the operator who receives a force feedback in predetermined areas of contact.

### Background of the invention

As known virtual reality is a particular type of human-computer interaction. Virtual reality can be defined as an interactive and immersive experience in a virtual environment. In a virtual environment the presence of the objects is simulated by a computer. In fact a computer is used for creating a virtual environment, for example with walls and objects that a graphical representation of an user (avatar) can touch operated by an user of an interface device. The fields of application of virtual reality are many. Among them the following can be cited: simulation, training, medicine, entertainment, teaching, design, etc.

In the simplest prior art interface devices an user manipulates an interaction element (end effector), for example a joystick, or a mouse or a pen. On the interaction element sensors are mounted that detect movements thereof and transmit responsive signals to a computer, in order to simulate an interaction of the user with the objects of the virtual environment that are shown on the computer screen.

To give the user realistic stimuli of the targeted virtual object, some existing devices are capable of transmitting a force feedback on the user. A force feedback is the replication on the operator of "haptic" sensations responsive to the contact with real or virtual objects.

The devices of prior art comprise usually a support, having three main axes, on which a reference element is mounted. The three main axes identify three degrees of freedom which define the position of the reference element in the space. The orientation of the reference element in the space is then defined by means of secondary axes corresponding to other three degrees of freedom, which are necessarily of rotational type.

A possible embodiment provides a serial structure in which the degrees of freedom are monitored in turn. More in detail, a first main axis is taken as axis of reference for the second main axis, which in turn is the axis of reference for the third main axis. The third main axis is then used as reference for the further three degrees of freedom used for determining the orientation of the reference element in the space.

In particular, in W09510080 a device is described where the degrees of freedom are exclusively rotational and a translation of the reference element with respect to the base occurs by a combination of rotations. This limits remarkably the field of action of the operator, i.e. the ratio between the size of the interface and the size of the "work space" within which the user interacts with the virtual environment. Furthermore, such a kinematical solution affects the conditioning of the ellipsoid of manipulability. In particular, this device has structure not suitable for supporting heavy loads at the interaction element, with possibility of applying forces of only a few Newtons. Heavier forces would load too much the interface, since the motors, which are mounted on the same movable structure, should be oversized, thus affecting the ratio between performances offered to the interaction element and motorisation used.

Finally, such devices transmit vibrations and have a structure that is not much precise and reliable.

### Summary of the invention

It is therefore an object of the present invention to provide an haptic interface device, which can be used as interaction means between the operator and a computer application, and which is capable of measuring its motion as well as of generating a force feedback in accordance with the programmed application.

It is another object of the present invention to provide a device with innovative mechanical features whereby the mechanical backlash is slight, the friction remarkably low, and with high transparency and isotropy.

It is a further object of the present invention to provide an interface device capable of working singularly in a wide workspace and enabling in that same space several overlapping interfaces, so that the number of replicable forces and the number of points of contact with the user are extended without reducing the workspace.

It is also object of the present invention to provide composition and integration means for a plurality of interfaces for many types of haptic applications in the field of manipulators, virtual reality, virtual prototyping with force feedback, education, entertainment, aids for disabled people, tele-operation and teaching.

These and other objects are accomplished by a haptic interface device as set out in claim 1.

Preferably, each differential transmission means of the rotation of the frame and of the platform about the respective axes comprises a circle sector which, operated by the first/second means for generating transmission forces, rotates about the first axis.

Advantageously to the circle sector a co-axial circle sector can be integrally associated of longer radius as torque amplifier.

In particular, the differential transmission means comprise actuating means chosen among:
- tendons;
- gearings;
- friction wheels;
- belts or chains;
- electromagnetic induction transmissions;
for operating the circle sectors.

More in detail, when the first and the second transmission forces applied by the first and the second means for generating the forces have a same direction and intensity, the respective circle sectors by them operated rotate about the first axis in a same direction, causing the sole rotation of the frame about the first axis. When, instead, the transmission forces are opposite the circle sectors rotate in opposite directions causing the sole rotation of the platform about the second axis. A different combination of the two forces results in a combined movement for both the degrees of freedom.

The kinematical arrangement as above described is therefore of differential type and determines a perfect isotropy in a plane orthogonal to the third degree of freedom of the kinematical serial chain, which is located in proximal position in the chain same. It assures, furthermore, an equal repartition on the motors of compensation loads and then high performances of force in the many points of the workspace. In particular, the differential kinematics and the tendon-type transmission give a high ratio force-efficiency on the inertia felt by the user and transmit a slight friction on the interaction means whereby the resulting haptic sensation is particularly realistic.

Advantageously, the interaction element is connected to a proximal stiff link with respect to which it has at least one degree of mobility, the proximal stiff link being capable of moving, in turn, according to three degrees of freedom with respect to the fixed base, by the serial kinematical chain formed with the frame, the rotating platform and the fixed base. In particular, third means are provided for generating a force in order to carry out also the third degree of freedom of the proximal stiff link with respect to the second.

In particular, the three degrees of freedom of the proximal stiff link with respect to the fixed base determine the position of the interaction element in the space, whereas the or each degree of mobility of the element of interaction with respect to the proximal stiff link determines the orientation of the interaction element in the space.

Advantageously, the third degree of freedom is of translational type obtained by means of a reciprocation between the proximal stiff link and the frame. In particular, the proximal stiff link comprises a rod which slides with respect to the rotating platform along a third axis orthogonal to the second axis, obtaining the third translational degree of freedom. For increasing the stiffness of the structure, without bearing too much on the overall weight, integrally to the rod stiffening tension rods can be provided.

In a possible embodiment, the interaction element has three rotational degrees of mobility with respect to the proximal stiff link.

Preferably, the means for generating the force are independent motors that operate respective shafts on which the tendons are wound.

Advantageously, means are provided for measuring the position in the space of the interaction element chosen among encoders, resolvers, potentiometers, etc.

In particular, the first and the second means for generating the first and the second force on the two rotational degrees of freedom of the stiff links are integral to the fixed base, whereas the means for generating the third force on the third degree of freedom are integral to the support.

Advantageously, the interaction element is chosen among a thimble, a pen, a handle, a glove.

In a preferred embodiment, the interaction element is a thimble connected to the proximal stiff link through at least one degree of freedom, equipped with a housing in which a capsule engages where the operator puts a finger in. This way, the interaction element can be fitted to the fingers of different operators, or to different fingers of a same operator, simply replacing the capsule having a same outer diameter but with a inner housing of suitable diameter.

According to a particular aspect of the invention, an haptic interface apparatus comprises at least a first and a second device, as above described, operatively connected by means of a control unit suitable for cooperating during the interaction with physical sensations coordinated by a same virtual environment. This way, an operator can engage with the environment by using, for example, both the hands or more fingers of the same hand obtaining a very wide "dexter" workspace obtained by the sum of the single workspaces, with respect to the size of the link. Advantageously, a calibration instrument is provided suitable for connecting at least two interaction elements of respective modular haptic interfaces opposed to one another in order to cause the relative added workspaces congruent, at the interaction with the operator.

Preferably, the calibration instrument has two capsules pivotally connected to each other by means of an universal joint at an end and having the other end suitable for engaging with the respective interaction elements of the opposed haptic interfaces. In particular, during the calibration of at least two haptic interfaces a first haptic interface works as "master" and runs through plurality of points of the workspace, whereas at least a second haptic interface works as "slave" and is moved by the calibration instrument in the same points, by calibrating the relative haptic interface with the master interface.

Advantageously, the control unit is operatively connected to at least one haptic interface and operates particular trajectories of force and/or position for each haptic interface interconnected.

In particular, the control unit operates means for acoustic signalling for all the steps of handling the interface, showing the activity of the haptic devices and improving the operative safety of the system in a working environment.

Advantageously, the control unit provides mechanisms of interconnection with a remote computer to assist the operation of the haptic devices to the particular instructions of the computer. Such mechanisms of interconnection can be based on various standards, for example IEEE 802.X, IEEE 1284, and other. For each standard, the control unit provides the relative hardware and software protocols to operate with remote computer in real time at frequencies of kilohertz.

In particular, the control unit provides the handling of systems to it interconnected, for computing the relative positions of the systems and coordinating their motions. To this end, once the haptic systems have been interconnected to the instrument of calibration, the control unit operates and detects the coordinated motion of the interface and determines accurately in a statistic way the relative posture of the haptic systems.

In particular, the control unit, using the statistical data determined by the instrument of calibration, provides mechanisms for an homogeneous use of the interconnected haptic devices, referring to a single operative space of the interaction elements to them associated.

In particular, the control unit provides manipulation procedures suitable for measuring the presence of elements of encumbrance in the workspace of the haptic interfaces and for preventing from any damages deriving from a blind type control.

### Brief description of the drawings

Further characteristics and the advantages of the haptic interface device used as interaction means with a virtual environment, according to the present invention, will be made clearer with the following description of an embodiment thereof, exemplifying but not limitative, with reference to the attached drawings, wherein:
- figure 1 shows a perspective view of an haptic interface device according to the invention;
- figure 2 shows diagrammatically in an elevational front view the device of figure 1;
- figures from 3 to 6 show diagrammatically in side views the device of figure 1 in different configurations depending on a chosen particular mechanism;
- figure 7 shows a perspective view of the device of figure 1 connected to a computer for displaying the interaction of the operator that manoeuvre it with objects of a virtual environment;
- figure 8 shows in a perspective elevational side view an haptic interface apparatus, according to the invention;
- figure 9 shows in detail a perspective view of a possible embodiment of a circle sector amplifier;
- figures 10 and 11 show a perspective view of a possible embodiment of an element of interaction with the operator which can be fixed to the device of figure 1;
- figures from 12 to 14 show diagrammatically a perspective view of three different configurations that can be obtained by the kinematical differential mechanism for highlighting the relative positions of the elements that make them up;
- figure 15 shows diagrammatically a top plan view of the relative positions of some elements of the differential mechanism of figures 12-14;
- figures 16 and 17 show a perspective elevational side view of a possible embodiment of the interaction element respectively in an exploded configuration and in an assembled configuration;
- figures 18 and 19 show a perspective view of a calibration instrument and two haptic interfaces on which it is mounted so that they are congruent in the workspaces respectively before and during the application.

### Description of a preferred embodiment

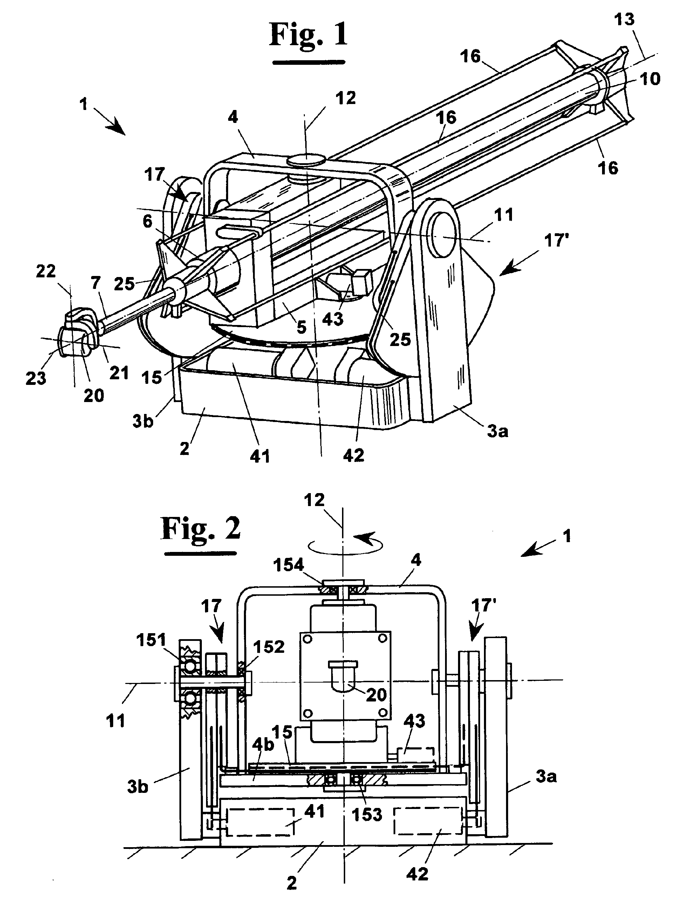

In figure 1 a possible embodiment is shown of an haptic interface device 1 for applications of virtual reality capable of transmitting force feedback sensations at least at one point of contact to an user during the interaction with an environment generated by a computer. In an embodiment of figure 1 the device 1 comprises a fixed base 2 with a cross section substantially rectangular to which at two opposite sides two opposite vertical supports 3a and 3b are connected.

The device 1 comprises, furthermore, a frame 4 having a substantially C-shaped portion connected to a plate 4b at its end. As shown in detail in figure 2, the C-shaped portion of frame 4 is hinged on a first axis 11 to vertical supports 3a and 3b at their upper portions by means of a bearing 151. This determines a first rotational degree of freedom of the serial kinematical chain of device 1. Frame 4 is then hinged at a plate 4b to a circular platform 15 capable of rotating about a second axis 12 orthogonal to the first axis 11 owing to the presence of a bearing 153 in order to define a second rotational degree of freedom.

According to the invention, the two rotational degrees of freedom defined as above described are operated by a first differential transmission means 17 and by a second differential transmission means 17', described in the detail hereinafter, which control the rotation of frame 4 and of platform 15 about the respective axes.

The kinematical chain, which comprises frame 4 and rotating platform 15, is then completed by a stiff link 10. The latter is part of the kinematical chain by means of a degree of freedom of rotational or translational type.

In particular, if the third degree of freedom is of translational type, as in the case shown in the figure, a support 5 is provided integral to platform 15 hinged to frame 4 about second axis 12 with respect to which it can rotate for the presence of a bearing 154. Support 5 comprises a tubular element 6 arranged with its axis of symmetry 13 orthogonal to axis 12. Coaxially to tubular element 6 and within it sliding stiff rod 10 is arranged.

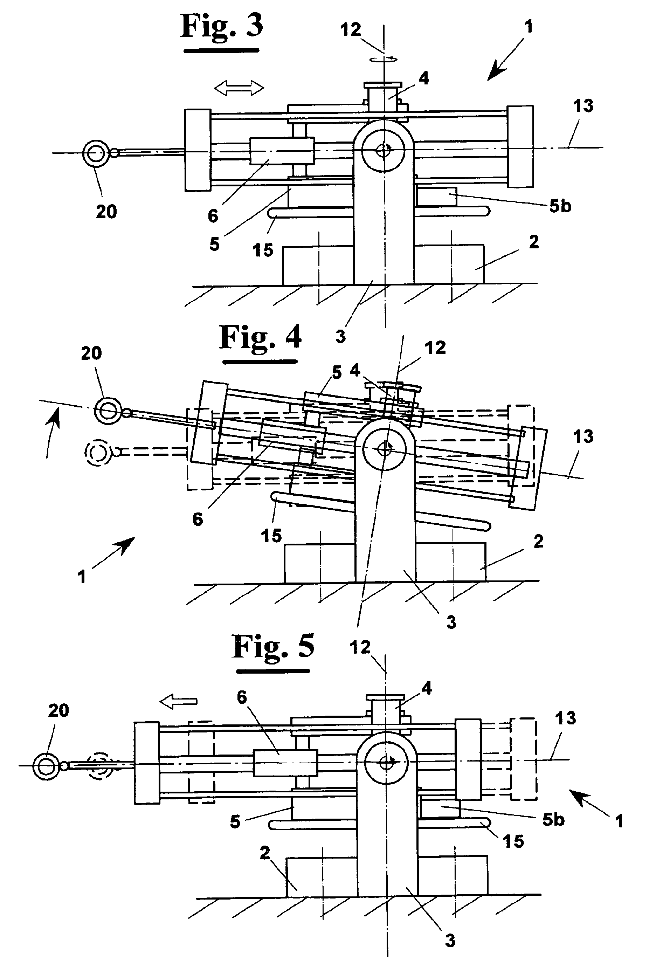

To increase the stiffness of the structure without bearing too much on the weight, integrally to rod 10, tension rods 16 are furthermore provided. The sliding of proximal stiff link formed by rod 10 with respect to tubular element 6 determines a translational degree of freedom, as already said, which completes the serial kinematical chain of interface device 1. The third translational degree of freedom can be associated to a counterweight 5b (shown only in figure 3), integral to support 5, for balancing statically the translational movement, and optimizing the compensation loads of the motors.

The choice of using a translational degree of freedom in combination with the two rotational degrees of freedom provides a wide workspace with respect to the size of the device. Such a wide ratio workspace/size is due to arranging the two rotational degrees of freedom about axes 11 and 12 near the base, and to a third degree of freedom with a translation by means of sliding rod 10, which can thus carry an interaction element 20 in a desired point of a spherical space about the base without that there are points that cannot be reached.

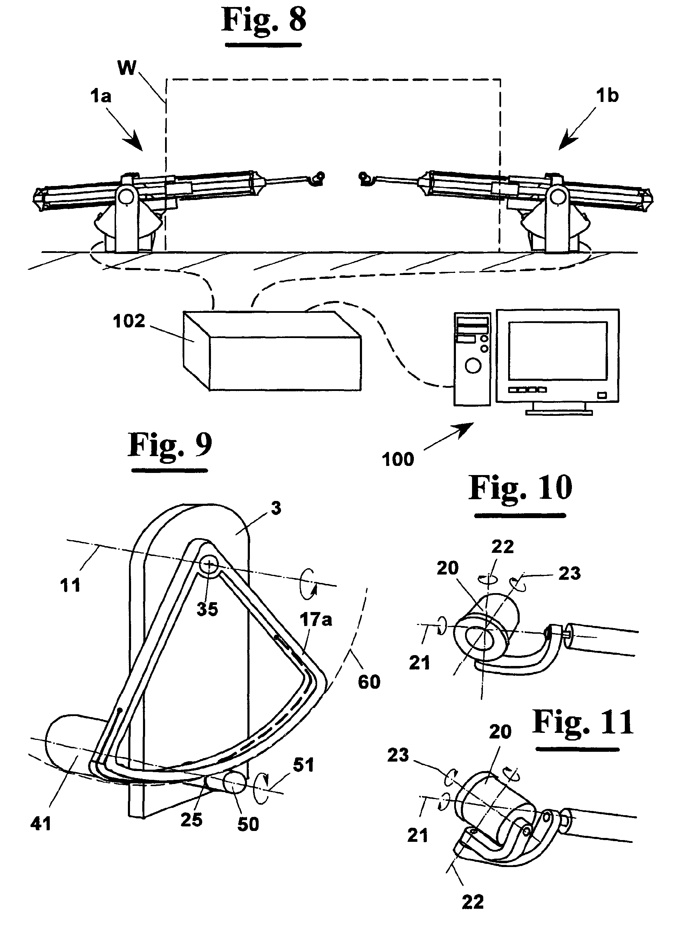

The three degrees of freedom of the stiff link 10 thus defined allow to determine the position in the space of the interaction element 20 with the operator, for example a thimble of known type. The orientation of thimble 20 in the space is measured by means of three further degrees of freedom, hereafter defined degrees of mobility, (figure 10 and 11) that add to those of the serial kinematical chain of the device 1. In particular, thimble 20 has three degrees of mobility of rotational type about three axes two by two orthogonal 21, 22 and 23.

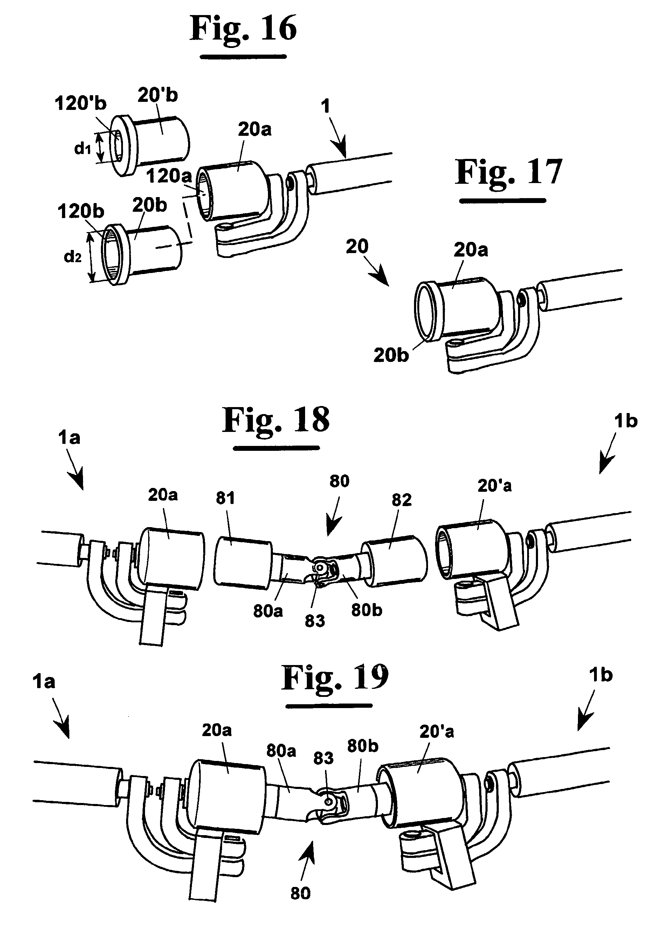

In figures 16 and 17 a preferred embodiment of the interaction element 20 is shown. It consists of a outer thimble 20a, connected to proximal stiff link 10, equipped with a housing 120 in which a capsule 20b is inserted chosen among capsule 20b, 20'b, etc. having same outer diameter, but different diameter (dᵢ) of the inner housing 120b, 120'b, etc. In it a finger is put by the operator.

This way, the interaction element 20 can be implemented to the finger of different operators, or to different fingers of a same operator, simply replacing the capsule 20b with one having a diameter d of housing 120 that is most suitable.

The three degrees of freedom of the serial kinematical chain of device 1 are operated by means of motors 41, 42 and 43 coupled to position transducers for determining the spatial position of thimble 20. The three degrees of mobility of thimble 20 are not, instead, neither motor driven or sensorised. This allows to apply a force of arbitrary direction on interaction element 20.

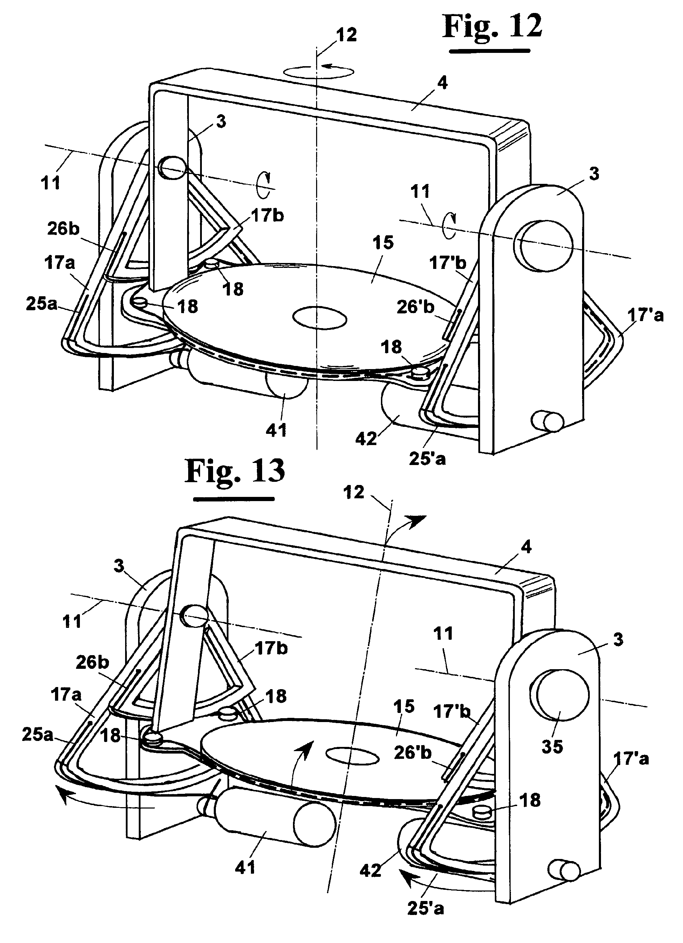

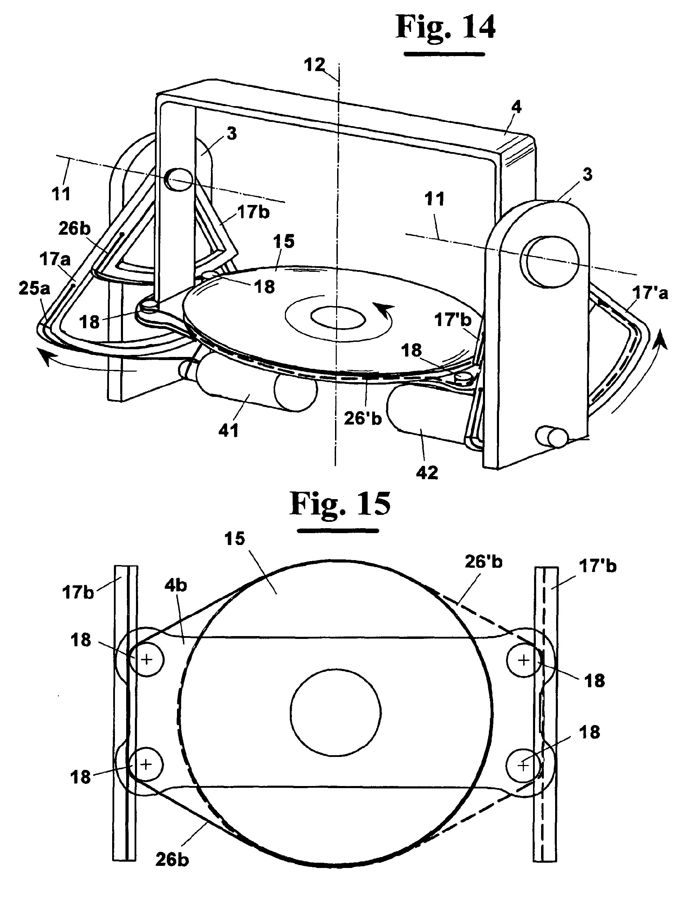

With reference to figures from 12 to 15, in a preferred embodiment the differential transmission means comprise a first couple of circle sectors 17a and 17b and a second couple of circle sectors 17'a and 17'b that are operated independently by two motors 41 and 42, which apply respectively a first and a second transmission force on frame 4 and on platform 15. When the forces generated by the motors 41 and 42 have a same direction and intensity the frame rotates 4 about first axis 11 while platform 15 does not rotate about second axis 12 (figure 13). When, instead, such forces are opposite there is the rotation of platform 15 about second axis 12 while the frame does not rotate about first axis 11 (figure 14). A different combination of the two forces results for both the degrees of freedom in a combined movement, case not shown.

More in detail, the couples of guides having the shape of circle sector 17a-17b and 17'a-17'b comprise first guide 17a and 17'a operated by motors 41 and 42 respectively by means of tendons 25a and 25'a, each of which is wound about the shaft of the corresponding motor and connected on guide 17a or 17'a same (figure 9). when motors 41 and 42 apply respectively a force on the circle sector 17a and 17'a to it connected by tendons 25a and 25'a, they rotate about axis 11 integrally to second circle sectors 17b and 17'b. The latter are operatively connected to platform 15 by means of tendons 26b and 26'b, respectively, which guided by pulleys 18 mounted on the basis 4b of frame 4 are wound about platform 15 on parallel planes (figure 15).

Therefore, if the forces generated by motors 41 and 42 have opposite direction, the rotation of the second circle sectors 17b and 17'b result in a rotation of platform 15 (figure 14). Alternatively, if the generated forces have equal intensity and direction, owing to the symmetry of the mechanism, the sum of the forces on the platform is zero and, therefore, platform 15 does not rotate about axis 12 but rotates along with frame 4 and circle sectors 17a-17b and 17'a-17'b about axis 11 (figure 13).

The circle sectors 17b and 17'b are the actual differential transmissions of the two rotational degrees of freedom. They are integrally associated to respective circle sectors 17a and 17'a having longer radius so that they amplify the torque of motors 41 and 42.

The differential actuation used for two rotational degrees of freedom provides a perfect isotropy in a plane orthogonal to the translational degree of freedom. In other words, the force feedback on the operator is independent from the direction in all the workspace obtaining an interaction realistic human/environment. The perfect isotropy obtained allows, furthermore, to obtain an uniform use of the power delivered by the motors in the workspace and an inertia felt by the user that is low.

In particular, the kinematics used and the choice of transmission tendons results in a high force-efficiency ratio of the actuators in order to transmit an a slight friction inertia and on thimble 20, so that the final haptic sensation is particularly realistic.

Motors 41 and 42, which belong to the differential mechanism are arranged on fixed base 2, whereas motor 43, which allows the sliding movement of stiff link 10 along axis 13 (figure 5) is, instead, connected to support 5, but in a position that do not disturb the motion of stiff link 10 same.

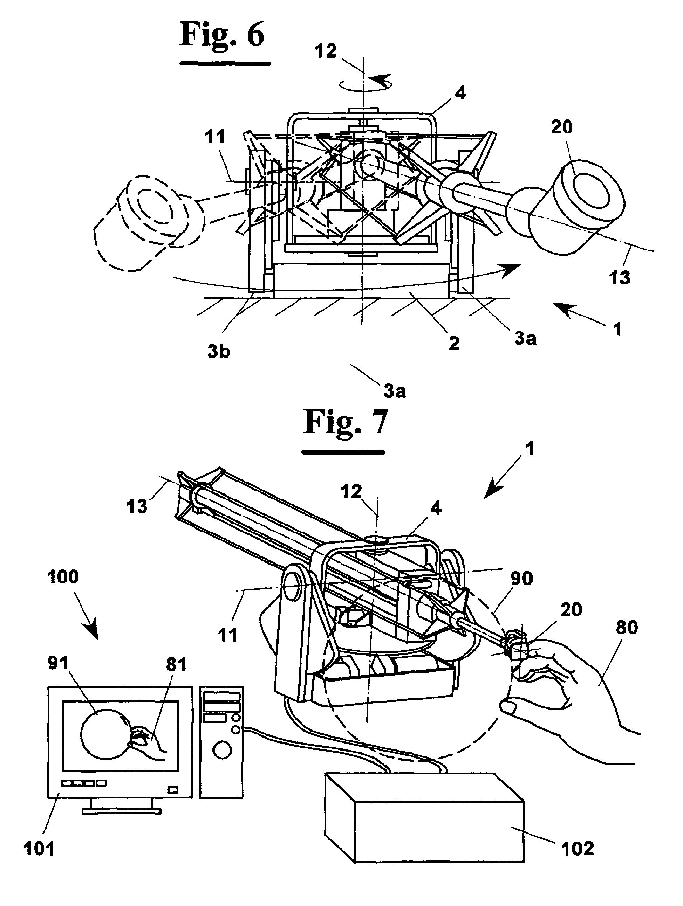

As shown in figure 7, haptic interface device 1 as above described can be connected by means of a control unit 102 to a computer 100 having a screen 101. On screen 101 the virtual environment is displayed in which the representation 81 of a limb of the operator, for example, of its hand 80 interacts with a three-dimensional object 91.

Control unit 102 generates, responsive to measured force/position signals, corresponding signals to the motors 41, 42 and 43 according to a predetermined function of force/position. Furthermore, it provides the compensation of possible not linear kinematical and dynamical responses and the conversion of the signals of force and position into Cartesian quantities. The control unit can also be associated to acoustic signalling means, not shown, for all the movement steps of interface 1, in order to indicate the activity of the haptic devices and to improve the operative safety of the system in a working environment.

According to the invention, furthermore, it is possible to couple two haptic interfaces 1a and 1b by means of a single control unit 102 to a computer 100. This is made for allowing to operator to interact with the environment and manipulate a same three-dimensional object at the same time with more limbs of the body, for example, two hands or two fingers of a same hand, etc. (figure 8), for more realistic interaction. In this case, the control unit 102 assists tracking particular trajectories of force and/or position for each haptic interface to it interconnected.

The control unit 102 provides mechanisms of interconnection with a remote computer to assist the operation of haptic devices 1a, 1b etc. According to the particular instructions of the computer. Such mechanisms of interconnection can be based on different standards (IEEE 802.X, IEEE 1284, and others). For each standard, the control unit 102 provides the relative hardware and software protocols in order to interact in real time at kHz frequencies with the remote computer.

For causing the workspaces of two or more haptic interfaces 1a, 1b, etc. to be congruent with one another in a joint workspace W (figure 8), a calibration instrument 80 is provided (figure 18 and 19). It has halves 80a and 80b pivotally connected by means of an universal joint 83 at an end and having the other end 81 and 82 suitable for engaging at the interaction elements 20 and 20' of two facing haptic interfaces 1a and 1b.

During the process of calibration an haptic interface 1a works as "master" and runs through a plurality of points of the workspace, whereas the other haptic interface 1b works as "slave" and is dragged by said calibration instrument through the same points, matching the points of that haptic interface with the master interface. In this step, the control unit moves the systems to it interconnected, for computing the relative positions of the systems and synchronizing their motorisation. To this end, once interconnected the haptic systems 1a and 1b through calibration instrument 80 (figure 18), the control system provides moves and contemporaneously detects the motion coordinated of the interfaces carrying out an accurate statistical mapping of the relative postures of the haptic systems.

In particular, control unit 102, using the statistical mapping obtained when using the instrument of calibration 80, programs an homogeneous use of the interconnected haptic devices, referring to a single workspace the interaction elements to them associated.

The matching of the two haptic interfaces, furthermore, allows to create a very wide workspace that allows the user to move freely during the interaction with the virtual environment.

## Claims

1. Haptic interface device (1) capable of exchanging force/position sensations with a user (80), comprising:
- a fixed base (2);
- at least one element of interaction (20) with said user, said element of interaction (20) bringing said user to at least one point of contact with an object (91) to touch and/or to handle where sensations are exchanged,
- a serial kinematical chain of stiff links (4, 15, 10) connecting said interaction element (20) and said fixed base (2) so that said interaction element (20) has at least three degrees of freedom with respect to said fixed base (2);
- means for measuring data signal of force/position at said interaction element (20) responsive to the relative position of said stiff links (4, 15, 10);
- the at least three degrees of freedom of said stiff links (4, 15, 10) with respect to said fixed base (2) comprising at least two rotational degrees of freedom;
**characterised in that** for operating said two rotational degrees of freedom it further comprises:
- a mobile frame (4), representing a first one of said stiff links, pivotally connected to said base (2) with respect to a first axis (11);
- a rotating platform (15), representing a second one of said stiff links, pivotally connected to said frame (4) about a second axis (12);
- a first (17) and a second (17') differential transmission means of the rotation of said frame (4) and of said platform (15) about the respective axes (11, 12) suitable for applying respectively a first and a second transmission force, whereby when said transmission forces have a same direction and intensity said frame (4) rotates about said first axis (11) whereas said platform (15) does not rotate about said second axis (12), and when said transmission forces are opposite said platform (15) rotates about said second axis (12) whereas said frame (4) does not rotate about said first axis (11), or vice versa;
- first and second means (41, 42) for generating respectively said first and second transmission forces associated to said first and second transmission means;
- a control unit (102) that generates, responsive to the signals of force/position as measured, corresponding driving stimuli to said first and second means for generating respectively said first and second transmission forces according to a predetermined function of force/position.

2. Haptic interface device, according to claim 1, wherein each of said differential transmission means, for the rotation of said frame (4) and of said platform (15) about the respective axes (11, 12), comprise a circle sector (17b, 17'b) which, operated by said first/second means (41, 42) for generating a transmission force, rotates about said first axis (11).

3. Haptic interface device, according to claim 2, wherein said circle sector (17b, 17'b) is integrally associated to a co-axial circle sector (17a, 17'a) of longer radius as torque amplifier.

4. Haptic interface device, according to claims 2 or 3, wherein said differential transmission means comprise actuating means chosen among:
- tendons;
- gearings;
- friction wheels;
- belts or chains;
- electromagnetic induction transmissions; for operating said circle sectors.

5. Haptic interface device, according to claim 1, wherein said interaction element (20) is connected to a proximal stiff link (10) with respect to which it has at least one degree of mobility, said proximal stiff link (10) being capable of moving, in turn, according to three degrees of freedom with respect to said fixed base (2) by said serial kinematical chain formed by said frame (4), said rotating platform (15) and said fixed base (2); said third degree of freedom being operated by third means for generating a force in order to operate also said proximal stiff link (10) with respect to the second stiff link.

6. Haptic interface device, according to claim 5, wherein said third degree of freedom is of translational type obtained by means of a reciprocation between said proximal stiff link (10) and said frame (4); said proximal stiff link (10) being formed by a rod which slides with respect to said rotating platform (15) along a third axis (13) orthogonal to said second axis (12), obtaining the third translational degree of freedom.

7. Haptic interface device, according to claim 6, wherein said rod (10) is associated to stiffening tension rods (16) in order to increase the stiffness of the structure without bearing too much on the overall weight.

8. Haptic interface device, according to claim 1, wherein said first and said second means for generating said first and said second force on the two rotational degrees of freedom of said stiff links are integral to said fixed base (2), whereas said means for generating said third force on said third degree of freedom are integral to said support.

9. Haptic interface device, according to claim 7, wherein said interaction element (20) is a thimble connected to said proximal stiff link (10) by at least one degree of freedom, equipped with a housing (120) in which a capsule (20b) engages where the operator puts a finger, whereby said interaction element (20) fits to the fingers of different operators, or to different fingers of a same operator, simply replacing said capsule (20b) with another having a same outer diameter and a inner housing (120) of suitable diameter.

10. Haptic interface apparatus **characterised in that** it comprises at least a first (1a) and a second (1b) device according to the previous claims operatively connected by means of a control unit (102) suitable for cooperating during the interaction with physical sensations coordinated by a same virtual environment, so that an operator can engage with the environment by using, for example, both the hands or more fingers of a same hand obtaining a wide dexter overall workspace, obtained by the sum of single workspaces, depending on the size of the link; said at least first and second devices being connected to the respective interaction elements by means of a calibration instrument suitable for causing the relative workspaces to be joined before engaging with the operator.

11. Haptic interface apparatus, according to claim 10, wherein said calibration instrument (80) has two capsules pivotally connected by means of a universal joint (83) at an end and having the other end (81, 82) suitable for engaging with the respective interaction elements (20, 20') of said opposed haptic interfaces (1a, 1b).

## Patentansprüche

1. Haptische Schnittstellenvorrichtung (1), die Kraft/Positions-Empfindungen mit einem Anwender (80) austauschen kann, mit:
- einer feststehenden Basis (2),
- zumindest einem Element für Interaktion (20) mit dem Anwender, wobei das Element für Interaktion (20) den Anwender zu mindestens einem Kontaktpunkt mit einem zu berührenden und/oder handzuhabenden Objekt (91),an dem Empfindungen ausgetauscht werden,
- einer seriellen kinematischen Kette starrer Verbindungsglieder (4,15,10), die das Interaktionselement (20) und die feststehende Basis (2) so verbinden, dass das Interaktionselement (20) zumindest drei Freiheitsgrade bezüglich der feststehenden Basis (2) besitzt,
- Mitteln zum Messen eines Datensignals einer Kraft/Position an dem Interaktionselement (20) in Reaktion auf die Relativposition der starrer Verbindungsglieder (4,15,10),
- wobei die mindestens drei Freiheitsgrade der starrer Verbindungsglieder (4,15,10) bezüglich der feststehenden Basis (2) zumindest zwei Rotations-Freiheitsgrade umfassen,
**dadurch gekennzeichnet, dass** sie zum Betätigen der zwei Rotations-Freiheitsgrade ferner umfasst:
- einen mobilen Rahmen (4), der ein erstes der starren Verbindungsglieder darstellt und mit der Basis (2) bezüglich einer ersten Achse (11) schwenkbar verbunden ist,
- einer Dreh-Plattform (15), die ein zweites der starren Glieder darstellt und um eine zweite Achse (12) schwenkbar mit dem Rahmen (4) verbunden ist,
- einem ersten (17) und einem zweiten (17') Differential-Übertragungsmittel für die Rotation des Rahmens (4) und der Plattform (15) um die jeweiligen Achsen (11,12), die geeignet sind, jeweils eine erste und eine zweite Übertragungskraft aufzubringen, wobei dann, wenn die Übertragungskräfte eine gleiche Richtung und Intensität haben, der Rahmen (4) um die erste Achse (11) dreht, während die Plattform (15) nicht um die zweite Achse (12) dreht, und dann, wenn die Übertragungskräfte entgegengesetzt sind, die Plattform (15) um die zweite Achse (12) dreht, während der Rahmen (4) nicht um die erste Achse (11) dreht oder umgekehrt,
- erste und zweite Mittel (41,42) zum jeweiligen Erzeugen der ersten und zweiten Übertragungskräfte, die den ersten und zweiten Übertragungsmitteln zugeordnet sind,
- eine Steuereinheit (102), die in Reaktion auf die Signale der Kraft/Position gemäß der Messung entsprechende Antriebsanregungen für die ersten und zweiten Mittel zum jeweiligen Erzeugen der ersten und zweiten Übertragungskräfte gemäß einer vorbestimmten Funktion der Kraft/Position erzeugt.

2. Die haptische Schnittstellenvorrichtung gemäß Anspruch 1, wobei jede der Differential-Übertragungsmittel für die Rotation des Rahmens (4) und der Plattform (15) um die jeweiligen Achsen (11,12) einen Kreissektor (17b,17'b) umfasst, der, betätigt durch die ersten/zweiten Mittel (41,42) zum Erzeugen einer Übertragungskraft, um die erste Achse (11) dreht.

3. Die haptische Schnittstellenvorrichtung gemäß Anspruch 2, wobei der Kreissektor (17b,17'b) integral einem koaxialen Kreissektor (17a,17'a) mit längerem Radius als Momentverstärker zugeordnet ist.

4. Die haptische Schnittstellenvorrichtung gemäß Anspruch 2 oder 3, wobei die Differential-Übertragungsmittel Betätigungsmittel umfassen, die unter folgenden ausgewählt sind:
- Spannglieder,
- Zahnräder,
- Reibräder,
- Riemen oder Ketten,
- elektromagnetische Induktions-Übertragungseinrichtungen, zum Betätigen der Kreissektoren.

5. Die haptische Schnittstellenvorrichtung gemäß Anspruch 1, wobei das Interaktionselement (20) mit einem proximalen starren Verbindungsglied (10) verbunden ist, bezüglich welchem es zumindest einen Freiheitsgrad der Bewegung besitzt, wobei das proximale starre Verbindungsglied (10) sich wiederum gemäß drei Freiheitsgraden bezüglich der feststehenden Basis (2) durch die durch den Rahmen (4), die Dreh-Plattform (15) und die feststehende Basis (2) gebildete serielle kinematische Kette bewegen kann, wobei der dritte Freiheitsgrad durch dritte Mittel zum Erzeugen einer Kraft betätigt wird, um auch das proximale starre Verbindungsglied (10) bezüglich dem zweiten starren Verbindungsglied zu betätigen.

6. Die haptische Schnittstellenvorrichtung gemäß Anspruch 5, wobei der dritte Freiheitsgrad vom Translationstyp ist, der mittels einer Hin- und Herbewegung zwischen dem proximalen starren Verbindungsglied (10) und dem Rahmen (4) erhalten wird, wobei das proximale starre Verbindungsglied (10) durch eine Stange gebildet ist, die bezüglich der Dreh-Plattform (15) entlang einer dritten Achse (13) gleitet, die orthogonal zu der zweiten Achse (12) ist, so dass der dritte Translations-Freiheitsgrad erhalten wird.

7. Die haptische Schnittstellenvorrichtung gemäß Anspruch 6, wobei die Stange (10) Versteifungs-Zugstangen (16) zugeordnet ist, um die Steifigkeit der Struktur ohne zu großen Einfluß auf das Gesamtgewicht zu erhöhen.

8. Die haptische Schnittstellenvorrichtung gemäß Anspruch 1, wobei die ersten und zweiten Mittel zum Erzeugen der ersten und zweiten Kraft auf die zwei Rotations-Freiheitsgrade der starren Verbindungsglieder integral mit der feststehenden Basis (2) sind, während die Mittel zum Erzeugen der dritten Kraft auf den dritten Freiheitsgrad integral mit der Halterung sind.

9. Die haptische Schnittstellenvorrichtung gemäß Anspruch 7, wobei das Interaktionselement (20) eine durch mindestens einen Freiheitsgrad mit dem proximalen starren Verbindungsglied (10) verbundene Kausche ist, die mit einem Gehäuse (120) versehen ist, in dem eine Kapsel (20b) dort in Eingriff ist, wohin der Anwender einen Finger legt, wobei das Interaktionselement (20) zu den Fingern unterschiedlicher Anwender oder zu unterschiedlichen Fingern desselben Anwenders passt, indem einfach die Kapsel (20b) einer anderen mit demselben Außendurchmesser und einem Innengehäuse (120) eines geeigneten Durchmessers ausgetauscht wird.

10. Ein haptisches Schnittstellengerät, **dadurch gekennzeichnet, dass** es umfasst; zumindest eine erste (1a) und eine zweite (1b) Vorrichtung gemäß den vorstehenden Patentansprüchen, die funktionsmäßig mittels einer Steuereinheit (102) verbunden sind und die geeignet sind, während der Interaktion mit physischen Empfindungen zusammenzuwirken, die durch dieselbe virtuelle Umgebung koordiniert sind, so dass eine Bedienperson mit der Umgebung in Eingriff gelangen kann, indem, beispielsweise, beide Hände oder mehrere Finger derselben Hand eingesetzt werden, um einen weiten rechtsseitigen Gesamtarbeitsraum zu erhalten, der durch die Summe einzelner Arbeitsräume erhalten wird, abhängig von der Größe des Verbindungsglieds, wobei die zumindest ersten und zweiten Vorrichtungen mit den jeweiligen Interaktionselementen mittels eines Kalibrationsinstruments verbunden sind, das geeignet ist, die relativen Arbeitsräume zu verbinden, bevor sie in Eingriff mit der Bedienperson sind bzw. gelangen.

11. Das haptische Schnittstellengerät gemäß Anspruch 10, wobei das Kalibrationsinstrument (80) zwei schwenkbar mittels eines Universal- bzw. Kreuzgelenks (83) verbundene Kapseln an einem Ende besitzt und dessen anderes Ende (81,82) zum Eingriff mit den jeweiligen interaktionselementen (20,20') der gegenüberliegenden haptischen Schnittstellen (1a,1b) geeignet ist.

## Revendications

1. Dispositif d'interface haptique (1) pouvant échanger des sensations de force / position avec un utilisateur (80), comprenant :
- une base fixe (2) ;
- au moins un élément d'interaction (20) avec ledit utilisateur, ledit élément d'interaction (20) amenant ledit utilisateur à au moins un point de contact avec un objet (91) pour toucher et/ou manipuler où des sensations sont échangées,
- une chaîne cinématique en série de liaisons rigides (4, 15, 10) raccordant ledit élément d'interaction (20) et ladite base fixe (2) de sorte que ledit élément d'interaction (20) a au moins trois degrés de liberté par rapport à ladite base fixe (2) ;
- des moyens pour mesurer le signal de données de force / position au niveau dudit élément d'interaction (20) sensible à la position relative desdites liaisons rigides (4, 15, 10) ;
- les au moins trois degrés de liberté desdites liaisons rigides (4, 15, 10) par rapport à ladite base fixe (2) comprenant au moins deux degrés de liberté de rotation ;
**caractérisé en ce que** pour actionner lesdits deux degrés de liberté de rotation, il comprend en outre :
- un châssis mobile (4), représentant une première desdites liaisons rigides, raccordée de manière pivotante à ladite base (2) par rapport à un premier axe (11) ;
- une plateforme rotative (15), représentant une seconde desdites liaisons rigides, raccordée de manière pivotante audit châssis (4) autour d'un second axe (12) ;
- des premiers (17) et seconds (17') moyens de transmission différentielle de la rotation dudit châssis (4) et de ladite plateforme (15) autour des axes (11, 12) respectifs appropriés pour appliquer respectivement une première et une seconde force de transmission, moyennant quoi lorsque lesdites forces de transmission ont une même direction et même intensité, ledit châssis (4) tourne autour dudit premier axe (11) alors que ladite plateforme (15) ne tourne pas autour dudit second axe (12), et lorsque lesdites forces de transmission sont opposées, ladite plateforme (15) tourne autour dudit second axe (12) alors que ledit châssis (4) ne tourne pas autour dudit premier axe (11) ou vice versa ;
- des premiers et seconds moyens (41, 42) pour générer respectivement lesdites première et seconde forces de transmission associées auxdites premiers et seconds moyens de transmission ;
- une unité de commande (102) qui génère, en réponse aux signaux de force / position tels que mesurés, des stimuli d'entraînement correspondants auxdits premiers et seconds moyens pour générer respectivement lesdites première et seconde forces de transmission selon une fonction prédéterminée de force / position.

2. Dispositif d'interface haptique selon la revendication 1, dans lequel chacun desdits moyens de transmission différentielle, pour la rotation dudit châssis (4) et de ladite plateforme (15) autour des axes (11, 12) respectifs, comprend un secteur en forme de cercle (17b, 17'b) qui, actionné par lesdits premiers / seconds moyens (41, 42) pour générer une force de transmission, tourne autour dudit premier axe (11).

3. Dispositif d'interface haptique selon la revendication 2, dans lequel ledit secteur en forme de cercle (17b, 17'b) est associé de manière solidaire à un secteur en forme de cercle coaxial (17a, 17'a) de rayon plus long en tant qu'amplificateur de couple.

4. Dispositif d'interface haptique selon les revendications 2 ou 3, dans lequel lesdits moyens de transmission différentielle comprennent des moyens d'actionnement choisis parmi :
- des tendons ;
- des engrenages ;
- des roues de friction ;
- des courroies ou chaînes ;
- des transmissions à induction électromagnétique ;
pour actionner lesdits secteurs en forme de cercle.

5. Dispositif d'interface haptique selon la revendication 1, dans lequel ledit élément d'interaction (20) est raccordé à une liaison rigide proximale (10) à laquelle il a au moins un degré de mobilité, ladite liaison rigide proximale (10) étant capable de se déplacer, à son tour, selon trois degrés de liberté par rapport à ladite base fixe (2) par ladite chaîne cinématique en série formée par ledit châssis (4), ladite plateforme rotative (15) et ladite base fixe (2) ; lesdits trois degrés de liberté étant actionnés par des troisièmes moyens pour générer une force afin d'actionner également ladite liaison rigide proximale (10) par rapport à la seconde liaison rigide.

6. Dispositif d'interface haptique selon la revendication 5, dans lequel ledit troisième degré de liberté est de type translationnel obtenu au moyen d'un mouvement de va et vient entre ladite liaison rigide proximale (10) et ledit châssis (4) ; ladite liaison rigide proximale (10) étant formée par une tige qui coulisse par rapport à ladite plateforme rotative (15) le long d'un troisième axe (13) orthogonal audit second axe (12), obtenant le troisième niveau translationnel de liberté.

7. Dispositif d'interface haptique selon la revendication 6, dans lequel ladite tige (10) est associée à des tiges de tension de raidissement (16) afin d'augmenter la rigidité de la structure sans trop peser sur le poids total.

8. Dispositif d'interface haptique selon la revendication 1, dans lequel lesdits premiers et deuxièmes moyens pour générer ladite première et ladite seconde force sur les deux degrés de rotation de liberté desdites liaisons rigides sont solidaires de ladite base fixe (2), alors que lesdits moyens pour générer ladite troisième force sur ledit troisième degré de liberté sont solidaires dudit support

9. Dispositif d'interface haptique selon la revendication 7, dans lequel ledit élément d'interaction (20) est un dé à coudre raccordé à ladite liaison rigide proximale (10) par au moins un degré de liberté, équipé avec un logement (120) dans lequel une capsule (20b) se met en prise à l'endroit où l'opérateur met un doigt, moyennant quoi ledit élément d'interaction (20) s'adapte aux doigts des différents opérateurs, ou aux différents doigts d'un même opérateur, simplement en remplaçant ladite capsule (20b) par une autre ayant un même diamètre externe et un logement interne (120) de diamètre approprié.

10. Appareil d'interface haptique **caractérisé en ce qu'**il comprend au moins un premier (1a) et un second (1b) dispositif selon les revendications précédentes raccordés de manière opérationnelle au moyen d'une unité de commande (102) appropriée pour coopérer pendant l'interaction avec des sensations physiques coordonnées par un même environnement virtuel, de sorte qu'un opérateur peut s'engager avec l'environnement en utilisant, par exemple, les deux mains ou plusieurs doigts d'une même main obtenant un large espace de travail global dextre, obtenu par la somme des espaces de travail uniques, en fonction de la taille de la liaison ; lesdits au moins premier et second dispositifs étant raccordés aux éléments d'interaction respectifs au moyen d'un instrument de calibrage approprié pour amener les espaces de travail relatifs à s'assembler avant de s'engager avec l'opérateur.

11. Appareil d'interface haptique selon la revendication 10, dans lequel ledit instrument de calibrage (80) a deux capsules raccordées de manière pivotante au moyen d'un joint universel (83) au niveau d'une extrémité et ayant l'autre extrémité (81, 82) appropriée pour se mettre en prise avec les éléments d'interaction (20, 20') respectifs desdites interfaces haptiques opposées (1a, 1b).
